# EUROPEAN PATENT SPECIFICATION

(11) **EP 3 087 146 B1**
(45) Date of publication and mention of the grant of the patent: **10.01.2018**
(21) Application number: 14827218.0
(22) Date of filing: 19.12.2014
(51) Int. Cl.: C09D 4/00, G02B 1/10

(54) **LIQUID POLYMERIZABLE COMPOSITION COMPRISING AN AMIDE OR A THIOAMIDE DERIVATIVE MONOMER AND MINERAL NANOPARTICLES DISPERSED THEREIN, AND ITS USE TO MANUFACTURE AN OPTICAL ARTICLE**
FLÜSSIGE POLYMERISIERBARE ZUSAMMENSETZUNG MIT EINEM AMID- ODER EINEM THIOAMIDDERIVATMONOMER UND DARIN DISPERGIERTE MINERALISCHE NANOPARTIKEL UND DEREN VERWENDUNG ZUR HERSTELLUNG EINES OPTISCHEN ARTIKELS
COMPOSITION LIQUIDE POLYMÉRISABLE COMPRENANT UN MONOMÈRE DÉRIVÉ D'AMIDE OU DE THIOAMIDE ET DES NANOPARTICULES MINÉRALES DISPERSÉES DANS CELUI-CI, ET SON UTILISATION POUR FABRIQUER UN ARTICLE OPTIQUE

(30) Priority: 20.12.2013 WO PCT/IB2013/003010
(43) Date of publication of application: 02.11.2016
(73) Proprietor: Essilor International, 94220 Charenton-le-Pont (FR); Nikon Corporation, Minato-ku Tokyo 108-6290 (JP)
(72) Inventor: CANTAGREL, Guillaume, Tokyo, Tokyo 170-0002 (JP)
(74) Representative: Cabinet Plasseraud
(86) International application number: PCT/EP2014/078917
(87) International publication number: WO 2015/092048

(56) References cited:
- WO-A1-2013/047786
- US-A1- 2013 241 092

## Description

The present invention concerns a liquid polymerizable composition for the preparation of a transparent polymeric material having a high refractive index and its use in the optical field.

The liquid polymerizable composition of the present invention comprises an amide or a thioamide derivative monomer with mineral nanoparticles homogeneously dispersed therein, said mineral nanoparticles being chosen in particular among ZnS, ZrO₂, TiO₂ or BaTiO₃.

In the last ten years, it has become more and more difficult to synthesize materials which have a refractive index higher than 1.6 as well as the other properties required in optical field (transparency i.e. high transmittance with low haze level, mechanical properties like chock resistance and abrasion resistance, optical properties including no optic distortion and high contrast, heat resistance, small shrinkage, chemical resistance from pure organic monomers.

One solution to overcome this problem is to introduce mineral nanoparticles into the monomer composition in order to increase its refractive index. Typically, nanoparticles having a refractive index from 2.1 to 3 may be chosen among ZrO₂, TiO₂, BaTiO₃ or ZnS. However, with classical monomers having a refractive index around 1.5-1.6 (such as methylmethacrylate or styrene), the amount of nanoparticles required to achieve a high refractive index can be above 50 % w/w, which may lead to the aggregation of the nanoparticles and adversely affect the transparency of the resulting material. Furthermore, it renders the material very brittle. To ensure good dispersibility of the nanoparticles into the monomer composition, the nanoparticles may require to be coated with a capping agent (such as hexanoic acid, methacrylic acid or methacryloxy trimethoxysilane). However, the capping agent generally has a refractive index of not more than 1.5 thereby reducing the benefit produced by the nanoparticle itself regarding the refractive index.

Therefore, the difficulty lies in the selection of the right combination of monomer composition, nanoparticles and capping agent, if required, that will ensure 1) a good stability over time of nanoparticles in the monomer composition and 2) a good dispersability of the nanoparticles into the monomer composition while leading to a transparent material exhibiting an increased refractive index as well as other advantages such as mechanical properties like for example chock resistance and abrasion resistance. Furthermore, the polymerizable composition obtained after mixing the monomer, nanoparticles and capping agent, if required, should be compatible with the substrate or support on which it is coated, and therefore display good adhesion properties on said substrate or support.

Lü C. et al. (Advanced material, 2006, 18, 1188-1192) disclose a polymerizable composition comprising N,N-dimethylacrylamide (N,N-DMAA) wherein a high content of mercaptoethanol-capped ZnS nanoparticles are dispersed. However, the refractive index of the poly N,N-DMAA is low (n = 1.511 as measured with Metricon 9010/M Prism coupler λ=594nm, 4 mW.cm⁻² for 10 min, 3 wt% Irg 184.), which makes it difficult to produce a material with high refractive index. WO2013/047786 discloses polymerizable inorganic particle dispersant to provide resin composite materials which have a refraction index of 1.65 or higher and a high Abbe number. The inventors have found a new polymerizable composition comprising an amide or a thioamide derivative monomer whose structure results in a high refractive index, which is higher than the refractive index of poly N,N-DMAA, and wherein mineral nanoparticles such as ZrO₂, ZnS, TiO₂ and BaTiO₃ can be homogeneously dispersed in order to increase the refractive index of the material.

ZnS nanoparticles usually require to be coated with one or more thiol-containing compounds to obtain homogeneous dispersions with controlled size.

ZrO₂, TiO₂ and BaTiO₃ nanoparticles can be homogeneously dispersed in the amide or thioamide derivative monomer without any capping agent.

The inventors have thus developed a polymerizable composition based on an amide or a thioamide derivative monomer within which mineral nanoparticles are homogeneously dispersed. Said nanoparticles have the advantage that they can be added into the composition in large amounts (up to 75% w/w) with a very good dispersibility and stability. The presence of said nanoparticles into the composition allows increasing the refractive index of the material which can be obtained by curing said polymerizable composition. Said material is able to show excellent optical properties, such as a transmittance higher than 80%,

Therefore, an object of the present invention is a liquid polymerizable composition comprising:
- a liquid monomer composition containing a monomer of formula (I): 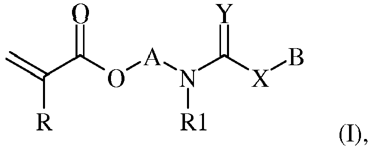 wherein:
   R represents a hydrogen atom or a methyl group,
   A represents a hydrocarbon chain comprising 1, 2, 3 or 4 carbon atoms, X is -O-, -S- or -NR2-,
   Y is an oxygen atom or a sulphur atom,
   R1 and R2, identical or different, are a hydrogen atom or a C1-C6 alkyl, and
   B represents a C1-C6 alkyl, aryl, heteroaryl, aryl C1-C6alkyl or heteroaryl C1-C6alkyl,
   or B is absent and R1 and X form a 5-membered heterocycle, such as 2-imidazolidinone, optionally substituted on -NH-, 2-oxazolidinone or 2-thiazolidinone,
   or B represents: 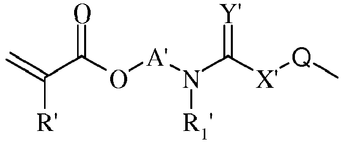
   wherein:
   R' represents a hydrogen atom or a methyl group,
   A' represents a hydrocarbon chain comprising 1, 2, 3 or 4 carbon atoms,
   Y' is an oxygen atom or a sulphur atom,
   X' is -O-, -S- or -NR2'-, and
   R1' and R2', identical or different, are a hydrogen atom or a C1-C6 alkyl,
   Q represents a hydrocarbon chain comprising 1, 2, 3 or 4 carbon atoms substituted with a aryl, heteroaryl, aryl C1-C6alkyl, aryloxy, arylthio, aryl C1-C10alkyloxy, aryl C1-C10alkylthio, heteroaryl C1-C6alkyl, heteroaryl C1-C10alkyloxy, or heteroaryl C1-C10alkylthio, and
- mineral nanoparticles homogeneously dispersed in said monomer composition.

According to the invention, aryl means an aromatic ring comprising from 5 to 10 carbon atoms, consisting of one ring or several fused rings, said aryl ring being optionally substituted by 1 to 3 groups chosen independently from C1-C6 alkyl, C1-C6 alkoxy, C1-C6 alkylthio, or halogen atom, as defined below. In particular aryl is preferably an optionally substituted phenyl.

Heteroaryl means a heteroaromatic ring comprising from 4 to 10 carbon atoms, and from 1 to 3 heteroatoms chosen from O, S or N, said heteroaromatic ring being optionally substituted by 1 to 3 groups chosen independently among C1-C6 alkyl, C1-C6 alkoxy, C1-C6 alkylthio, or halogen atom, as defined below.

C1-C6 alkyl means a linear or branched alkyl group comprising from 1 to 6 carbon atoms. Alkyl groups include for instance methyl, ethyl, n-propyl, isopropyl, n-butyl, isobutyl, pentyl, and hexyl.

C1-C6 alkoxy means a C1-C6 alkyl-O- group, wherein C1-C6 alkyl is defined as above. C1-C6 alkoxy groups include for instance methoxy or ethoxy.

C1-C6 alkylthio means a C1-C6 alkyl-S- group, wherein C1-C6 alkyl is defined as above. C1-C6 alkylthio include for instance methylthio or ethylthio.

Halogen atom includes chloro, bromo or iodo atoms.

Aryloxy means an aryl-O- group. Aryloxy includes for instance phenoxy or methylphenoxy.

Arylthio means an aryl-S- group. Arylthio includes for instance phenyl thio or methylphenylthio.

Aryl C1-C6 alkyl means the radical RR'- wherein R is an aryl and R' is a C1-C6alkyl, i.e. a linear or branched alkyl group comprising from 1 to 6 carbon atoms.

ArylC1-C10alkyloxy means the radical RR'-O- wherein R is an aryl and R' is a C1-C10alkyl, i.e. a linear or branched alkyl group comprising from 1 to 10 carbon atoms.

ArylC1-C10alkylthio means the radical RR'-S- wherein R is an aryl and R' is a C1-C10alkyl, i.e. a linear or branched alkyl group comprising from 1 to 10 carbon atoms.

HeteroarylC1-C6alkyl means the radical RR'- wherein R is a heteroaryl and R' is a C1-C6alkyl, i.e. a linear or branched alkyl group comprising from 1 to 5 carbon atoms.

HeteroarylC1-C10alkyloxy means the radical RR'-O- wherein R is a heteroaryl and R' is a C1-C10alkyl, i.e. a linear or branched alkyl group comprising from 1 to 10 carbon atoms.

HeteroarylC1-C10alkylthio means the radical RR'-S- wherein R is a heteroaryl and R' is a C1-C10alkyl, i.e. a linear or branched alkyl group comprising from 1 to 10 carbon atoms.

According to the present invention, a hydrocarbon chain comprising 1, 2, 3 or 4 carbon atoms may be linear or branched. For instance, it may be butylene, a propylene, an ethylene, a methylene, or a methylethylene.

Without wishing to be bound by any theory, the amide derivative moieties of formula (I) are believed to help in dispersing the nanoparticles.

Moreover, B and Q may bear a high refractive index moiety, in particular a group which is rich in electronic density, such as an aryl or a heteroaryl group, which helps in increasing the refractive index of the material which can be obtained by curing the polymerizable composition.

The nanoparticles are homogeneously dispersed in the monomer of formula (I) by solvation. Solvation involves different types of intermolecular interactions, such as hydrogen bonding, ion-dipole, dipole-dipole attractions or Van der Vaals forces.

The various embodiments of formula (I) are described hereafter.

In one embodiment, the monomer of formula (I) is monofunctionnal, i.e. it bears only one polymerizable group, namely an acrylate group or a methacrylate group.

In another embodiment, the monomer of formula (I) is bifunctional, i.e. it bears two polymerizable groups, namely an acrylate group and/or a methacrylate group.

In one embodiment, R represents a hydrogen atom.

In one embodiment, R represents a methyl group.

In one embodiment, A represents a hydrocarbon chain comprising 2 carbon atoms.

In one embodiment, X is -O-.

In one embodiment, X is -S-.

In one embodiment, X is -NR2-, wherein R2 is a hydrogen atom or a C1-C6 alkyl.

In one embodiment, Y is an oxygen atom.

In one embodiment, Y is a sulphur atom.

In one embodiment, the monomer of formula (I) is a derivative of urea (i.e. Y is an oxygen atom and X is -NH-).

In one embodiment, the monomer of formula (I) is a derivative of carbamate (i.e. Y is an oxygen atom and X is -O-).

In one embodiment, B is absent and R1 and X form a high refractive index moiety, such as a 5-membered heterocycle, in particular a 2-imidazolidinone, optionally substituted on -NH-, 2-oxazolidinone or 2-thiazolidinone.

According to this embodiment, R represents a hydrogen atom or a methyl group, in particular a methyl group.

According to this embodiment, A represents a hydrocarbon chain comprising 1, 2, 3 or 4 carbon atoms, in particular is -CH2-CH2.

According to this embodiment, the monomer of formula (I) is in particular the following one:

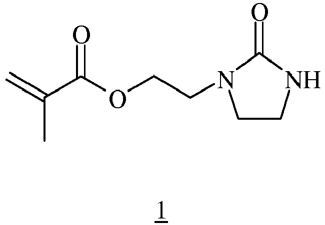

Compound 1 (2-(2-Oxo-1-imidazolidinyl) ethyl methacrylate) is available from Aldrich: CAS 86261-90-7 (25 wt. % in methyl methacrylate).

Other monomers of formula (I) wherein B is absent and R1 and X form a 5-membered heterocycle include the following ones:

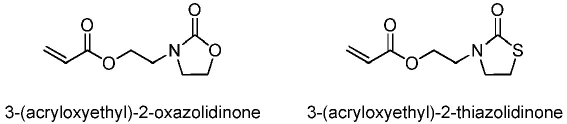

In another embodiment, B represents a C1-C6 alkyl, or a high refractive index moiety, such as aryl, heteroaryl, aryl C1-C6alkyl or heteroaryl C1-C6alkyl.

In particular, B is a C1-C6 alkyl, such as methyl or ethyl, or a phenyl.

According to this embodiment, R represents a hydrogen atom or a methyl group, in particular a methyl group.

According to this embodiment, A represents a hydrocarbon chain comprising 1, 2, 3 or 4 carbon atoms, in particular is -CH2-CH2-.

According to this embodiment, X is -O-, -S- or -NR2-, in particular -O- or -NR2-, wherein R2 is a C1-C6 alkyl, in particular a methyl or an ethyl.

According to this embodiment, the monomer of formula (I) is in particular one of the following ones: 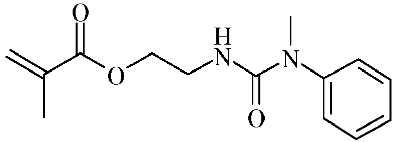 or

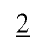

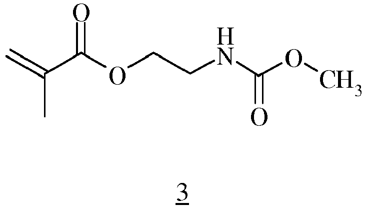

According to another embodiment, B represents: 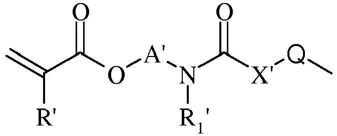 wherein:
R' represents a hydrogen atom or a methyl group,
A' represents a hydrocarbon chain comprising 1, 2, 3 or 4 carbon atoms,
X' is -O-, -S- or -NR2-,
R1' and R2', identical or different, are a hydrogen atom or a C1-C6 alkyl, and
Q represents a hydrocarbon chain comprising 1, 2, 3 or 4 carbon atoms substituted with a high refractive index moiety, such as aryl, heteroaryl, aryl C1-C6alkyl, aryloxy, arylthio, aryl C1-C10alkyloxy, aryl C1-C10alkylthio, heteroaryl C1-C6alkyl, heteroaryl C1-C10alkyloxy, or heteroaryl C1-C10alkylthio.

According to this embodiment, R represents a hydrogen atom or a methyl group, in particular a methyl group.

According to this embodiment, A represents a hydrocarbon chain comprising 1, 2, 3 or 4 carbon atoms, in particular is -CH2-CH2.

According to this embodiment, X is -O-, -S- or -NR2-, in particular -O-.

According to this embodiment:
- R' represents a hydrogen atom or a methyl group, in particular a hydrogen atom.
- A' represents a hydrocarbon chain comprising 1, 2, 3 or 4 carbon atoms, in particular 2 carbon atoms,
- X' is -O-, -S- or -NR2-, in particular is -O-,
- R1' is a hydrogen atom or a C1-C6 alkyl, in particular a hydrogen atom,
- Q represents a hydrocarbon chain comprising 1, 2, 3 or 4 carbon atoms, in particular 2 carbons atoms, substituted with a high refractive index moiety, such as aryl, heteroaryl, aryl C1-C6alkyl, aryloxy, arylthio, aryl C1-C10alkyloxy, aryl C1-C10alkylthio, heteroaryl C1-C6alkyl, such as methylthiophene, heteroaryl C1-C10alkyloxy, or heteroaryl C1-C10alkylthio, in particular substituted with an aryl thio, such as a phenylthio group.

According to one particular embodiment, Q is -CH2-CH2(CH2-S-Ph)-.

According to this embodiment, the monomer of formula (I) is in particular the following one:

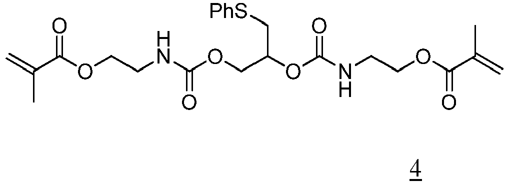

The monomers of formula (I) may be synthetized according to methods well known by the person skilled in the art.

For instance, the monomer of formula (I) may be synthetized as follows.
1. Imidazolidinone monomers may be obtained according to the following reaction: 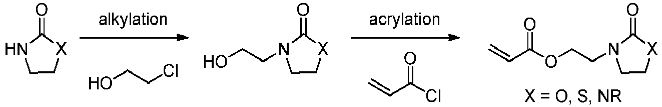
2. Monofunctional monomers can be obtained by nucleophilic addition of HXB compound on 2-isocyanoethylmethacrylate into dichloromethane: 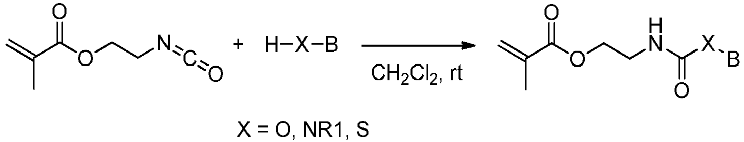
3. Bifunctional monomers can be obtained by the double addition of a bis-nucleophilic compound HX'Q'X'H onto 2 isocyanoethylmethacrylate:

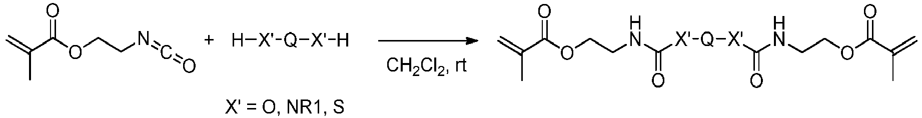

Another object of the present invention is a liquid polymerizable composition comprising:
- a monomer of formula (II): 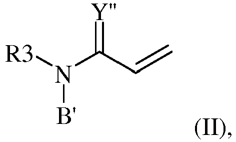 wherein:
   R3 represents a C1-C6 alkyl or an aryl,
   Y" is an oxygen atom or a sulphur atom, and
   B' represents a C1-C6 alkyl, aryl, heteroaryl, aryl C1-C6alkyl or heteroaryl C1-C6alkyl,
   provided that when Y" is a sulphur atom, B' is optional, i.e. is present or absent, and
- mineral nanoparticles homogeneously dispersed in said monomer composition.

In one embodiment, R3 is a methyl, ethyl or propyl.

In one embodiment, B' is a C1-C6 alkyl, or a high refractive index moiety, such as aryl, in particular phenyl, heteroaryl, aryl C1-C6alkyl or heteroaryl C1-C6alkyl.

In one embodiment, Y" is a sulphur atom and B' is C1-C6 alkyl.

Monomers of formula (II) include for instance the following monomers:

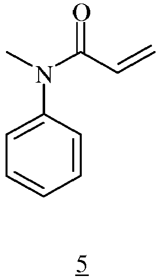

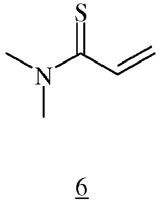

The monomers of formula (II) may be synthetized according to methods well known by the person skilled in the art, or be commercially available.

For instance, the acrylamides of formula (II) may be synthetized by performing an acrylation reaction on commercially available secondary anilines. The acrylation may be performed by reacting acryloyl chloride with a secondary amine in the presence of a non nucleophilic base like triethylamine.

Synthesis of thioamides is well known in the literature, for example: T. B. Nguyen, L. Ermolenko, A. Al-Mourabit, Org. Lett., 2012, 14, 4274-4277.

Another object of the present invention is a liquid polymerizable composition comprising:
- a monomer of formula (III): 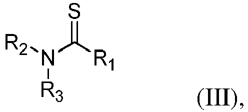 wherein:
   R1, R2 or R3 represents a hydrogen atom, a C1-C6 alkyl, an aryl, or a polymerizable function, wherein at least one group among R1, R2 and R3 is a polymerizable function,
   and
- mineral nanoparticles homogeneously dispersed in said monomer composition.

A polymerizable function is a chemical function enabling the monomer of formula (I) to form a solid polymer, for example by thermal and/or UV treatment.

Suitable polymerizable functions include vinyl, allyl, isocyanate, thioisocyanate, acrylate, thioacrylate, methacrylate, thiomethacrylate, ether, thioether, alcohol, epoxy, thiol, and episulfide.

Preferably, the polymerizable function is selected from the group consisting of acrylate, thioacrylate, methacrylate, thiomethacrylate, thiol, episulfide, or epoxy, more preferably among acrylate, methacrylate, thiol, or episulfide.

The liquid polymerizable composition of the invention may comprise only one monomer of formula (I), (II) or (III) or a mixture of monomers of formula (I), (II) or (III), or a mixture of monomer(s) of formula (I), (II) or (III) and another monomer, such as methyl methacrylate. If the monomer of formula (I), (II) or (III) is solid, it may be solubilized in another monomer of formula (I), (II) or (III) which is liquid in order to form a liquid polymerizable composition or with any other liquid monomer, such as N,N-DMAA.

In one particular embodiment, the liquid polymerizable composition of the invention consist essentially of one monomer of formula (I), (II) or (III) or a mixture of monomers of formula (I), (II) or (III).

According to the invention, the mineral nanoparticles are homogeneously dispersed in the monomer of formula (I), (II) or (III), i.e. do not form aggregates having a size higher than 100 nm, as measured by transmission electronical microscopy. A homogeneous dispersion of nanoparticles allows obtaining a composite material whose haze after curing is below 5 % as measured according to Japanese Industrial Standard No. K 7136-2000 (equivalent to ISO 14782-1999). Furthermore, the material composite is transparent.

The mineral nanoparticles may be chosen among ZnS, ZrO₂, TiO₂ or BaTiO₃.

The nanoparticles can be synthetized according to methods well known by the person skilled in the art, or be commercially available in the form of powder or a suspension in a solvent, such as methanol.

For instance, TiO₂ nanoparticles in suspension in methanol with a particle size of 60 nm are marketed by Sakai chemical under the commercial name SRD-2M.

For instance, ZrO₂ nanoparticles in suspension in methanol with a particle size of 35 nm are marketed by Sakai chemical under the commercial name SZR-M.

For instance, BaTiO₃ nanoparticles in the form of powder (cubic crystalline phase) with a particle size of less than 100 nm (BET) are marketed by Aldrich under the commercial name Barium Titanate (IV) (No. Cas: 12047-27-7).

According to the invention, the "particle size" is the diameter of the highest population of particles as measured with dynamic light scattering (DLS).

The particle size of the mineral nanoparticles is preferably less than 50 nm, more preferably between 30 nm and 5 nm. This size range allows limiting haze in the final polymerized material. It can be measured by dynamic light scattering (DLS), for instance by using Horiba SZ-100 size measurement instrument.

The nanoparticles of ZnS are preferably coated with one or more thiol-containing compounds. Preferably, nanoparticles of ZnS are coated with mercaptoethanol, thiophenol, mercaptophenol, or a mixture thereof.

Typically, the refractive index of the nanoparticles is as follows:
- ZnS, spharelite, cubic, n(589 nm)= 2.3691(Landolt-Bornstein Numerical Data and Functional Relationships in Science and Technology, III/30A, High Frequency Properties of Dielectric - Crystals. Piezooptic and Electrooptic Constants, Springler-Verlag, Berlin 1996);
- BaTiO₃, tetragonal, ordinary ray: n(589 nm)=2.4405 (Shannon, R.D., Shannon, R.C., Medenbach, O., and Fischer, R. X., "Refractive Index and Dispersion of Fluorides and Oxides", J. Phys. Chem. Ref. Data 31, 931, 2002.);
- TiO₂, rutile, tetragonal, ordinary ray: n(589 nm)=2.562 (Shannon, R.D., Shannon, R.C., Medenbach, O., and Fischer, R. X., "Refractive Index and Dispersion of Fluorides and Oxides", J. Phys. Chem. Ref. Data 31, 931, 2002.);
- ZrO₂, tetragonal, ordinary ray: n(589 nm) = 2.20 (Polymer Journal, 2008, 40, 1157-1163);

The particle size of the ZnS nanoparticles is less than 10 nm, preferably between 3 nm and 6 nm. This size range allows limiting haze in the final polymerized material.

Methods for preparing ZnS nanoparticles with capping agent(s), such as thiol-containing compound(s), are well known to the person skilled in the art.

For instance, Zn(OAc)₂ (a Zn source), the capping agent (s) and thiourea (a sulphur source) are dissolved in a solvent, such as DMF (dimethylformaldehyde), N,N Dimethylacetamide, or DMSO (dimethylsulfoxide) (for instance 2.5g of Zn(OAc)₂ in 30ml of DMF). Then the solution is heated under reflux under nitrogen atmosphere. At the end of the heating process, a transparent solution is obtained. A solvent such as ethanol, acetone, acetonitrile, toluene or water, is added to the solution to induce precipitation of the coated ZnS nanoparticles, depending on the particles properties. The precipitation allows the separation of the particles from the solvent and the capping agent which has not reacted. The solvent is chosen depending on the coupling agent. Typically, when thiophenol is used as a coupling agent, water is used to precipitate the coated particles. Particles may be separated from the solution by centrifugation and washed with methanol, acetonitrile or toluene. See for instance the method described in Changli Lü, Yuanrong Cheng, Yifei Liu, Feng Liu, and Bai Yang ("A Facile Route to ZnS-Polymer Nanocomposite Optical Materials with High Nanophase Content via Gamma-Ray Irradiation Initiated Bulk Polymerization", Adv. Mater., 2006, 18, 1188-1192.).

The above method advantageously allows the dispersion of the nanoparticle in powder form in the monomer composition, as opposed to other methods which require the dispersion of the nanoparticles into a solvent before the introduction into the monomer composition.

Suitable thiol-containing compounds include small molecules, such as those having a molar mass lower than 250g/mol, containing one thiol function and having a high refractive index higher than 1.5 (at 594 nm).

The thiol-containing compound of the invention is preferably chosen among mercaptoethanol, thiophenol, mercaptophenol, or a mixture thereof.

When preparing the coated nanoparticles of ZnS, the relative molar amounts of the Zn source, the thiol-containing compound and the S source is chosen so that during the process of preparation, no self precipitation occurs. Typically, the molar ratio of the thiol-containing compound over Zn is comprised between 0.5 and 3, preferably between 0.8 and 2. The molar ratio is number of moles of thiol-containing compound for one mole of zinc acetate.

Preferably, the nanoparticles of ZnS are coated with a mixture of mercaptoethanol (ME) and thiophenol (PhS). The molar ratio of ME and PhS over Zn is comprised between 2.0 and 0.1, more preferably between 0.6and 0.3. When the ZnS nanoparticles are coated with only with ME, the molar ratio of ME over Zn is comprised between 1.3 and 1.6.

Preferably, the molar ratio of PhS over ME is from 0.5 to 1, more preferably is around 0.3/0.6.

The nanoparticles of ZnS have a crystal size comprised between 3 and 10 nm, more preferably between 3 and 6 nm. The crystal size can be determined by XR diffraction according to the Williamson-Hall method.

The nanoparticles of ZnS coated with said thiol-containing compound(s) have a particle size of comprised between 4 and 80 nm. The particle size of the coated nanoparticles can be determined by measurement with a Dynamic Light Scattering instrument (SZ-100 from Horiba) and correspond to size of highest population determine with this tool.

The amount of the mineral nanoparticles (coated if required or uncoated if not required) in the polymerizable composition is comprised between 5 and 60% w/w, preferably between 10 and 50% w/w, based on the total weight of the liquid polymerizable composition.

The liquid polymerizable composition of the invention may comprise other ingredients typically used in polymerizable compositions, such as monomers other than those of formula (I), (II) or (III), a mold release agent, photo stabilizer, antioxidant, dye anti-coloring agent, fillers, UV light absorber or optical brightener.

Another object of the present invention is an optical substrate coated with the liquid polymerizable composition as previously defined.

In this invention "coating" or "coat" should be construed to cover not only regular coatings but also a resin layer having aspherical shape provided on a spheric or aspheric glass lens to obtain aspheric effect. The typical such resin layer is disclosed in US 7,070,862.

The optical substrate may be any organic glass commonly known and used in the optical field. It may be a thermoplastic resin such as a thermoplastic polycarbonate, or a thermoset or photo-cured resin such as CR®, polyurethane or polythiourethane.

The thickness of the liquid polymerizable coating can be comprised between 1 µm and 1 mm.

Another object of the present invention is an optical article comprising:
(a) an optical substrate, and
(b) a coating obtained by thermal and/or UV curing of the liquid polymerizable composition as previously defined.

Another object of the present invention is to cure the liquid polymerizable as bulk material for optical article. The thickness of cured liquid polymerizable as bulk material can be comprised between 1 mm and 2 cm.

The optical article is preferably an optical lens, such as an ophthalmic lens, sunglass lens or other optical lens for optical instrument, and most preferably an ophthalmic lens. It may contain functional layers such as polarizing layers, anti-reflecting coatings, visible light and UV absorbing coatings, anti-choc coatings, abrasion-resistant-coating, anti-smudge-coating, anti-fog coating, anti-dust coating, photochromic coatings, all of which are familiar to the skilled person.

The liquid polymerizable composition coating may be applied onto the optical substrate by any suitable coating method such as dip-coating, bar coating, spray coating, or spin coating.

The curing of the resulting layer is done by subjecting the coated substrate to UV light and/or heat. The refractive index of the cured layer can be increased between 0.01 and 0.26 for example.

Another object of the present invention is the use of mineral for increasing the refractive index of a polymeric material obtained by thermal and/or UV curing of a liquid monomer composition containing a monomer of formula (I): 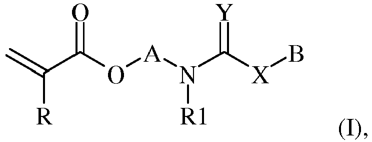 wherein:
R represents a hydrogen atom or a methyl group,
A represents a hydrocarbon chain comprising 1, 2, 3 or 4 carbon atoms,
Y is an oxygen atom or a sulphur atom
X is -O-, -S- or -NR2-,
R1 and R2, identical or different, are a hydrogen atom or a C1-C6 alkyl, and
B represents a C1-C6 alkyl, aryl, heteroaryl, aryl C1-C6alkyl or heteroaryl C1-C6alkyl,
or B is absent and R1 and X form a 5-membered heterocycle, such as a 2-imidazolidinone, optionally substituted on -NH-, 2-oxazolidinone or 2-thiazolidinone,
or B represents: 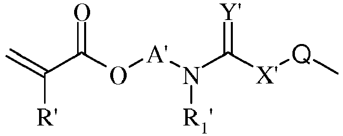
wherein:
R' represents a hydrogen atom or a methyl group,
A' represents a hydrocarbon chain comprising 1, 2, 3 or 4 carbon atoms,
Y' is an oxygen atom or a sulphur atom,
X' is -O-, -S- or -NR2-,
R1' and R2', identical or different, are a hydrogen atom or a C1-C6 alkyl, and
Q represents a hydrocarbon chain comprising 1, 2, 3 or 4 carbon atoms substituted with an aryl, heteroaryl, aryl C1-C6alkyl, aryloxy, arylthio, aryl C1-C10alkyloxy, aryl C1-C10alkylthio, heteroaryl C1-C6alkyl, heteroaryl C1-C10alkyloxy, or heteroaryl C1-C10alkylthio.
wherein said mineral nanoparticles are homogeneously dispersed in said monomer composition and have a refractive index which is higher than the refractive index of the monomer of formula (I), preferably higher than 2.

Another object of the present invention is the use of mineral nanoparticles for increasing the refractive index of a polymeric material obtained by thermal and/or UV curing of a liquid monomer composition containing a monomer of formula (II): 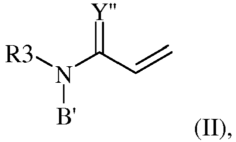 wherein:
R3 represents a C1-C6 alkyl or an aryl,
Y" is an oxygen atom or a sulphur atom, and
B' represents a C1-C6 alkyl, aryl, heteroaryl, aryl C1-C6alkyl or heteroaryl C1-C6alkyl,
provided that when Y" is a sulphur atom, B' is optional, i.e. is present or absent, and
wherein said mineral nanoparticles are homogeneously dispersed in said monomer composition and have a refractive index which is higher than the refractive index of the monomer of formula (II), preferably higher than 2.

Another object of the present invention is the use of mineral nanoparticles for increasing the refractive index of a polymeric material obtained by thermal and/or UV curing of a liquid monomer composition containing a monomer of formula (III): 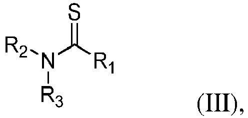 wherein:
R1, R2 or R3 represents a hydrogen atom, a C1-C6 alkyl, an aryl, or a polymerizable function, wherein at least one group among R1, R2 and R3 is a polymerizable function, and
wherein said mineral nanoparticles are homogeneously dispersed in said monomer composition and have a refractive index which is higher than the refractive index of the monomer of formula (III), preferably higher than 2.

In every embodiment, the mineral nanoparticles may be chosen among ZnS, ZrO₂, TiO₂ or BaTiO₃.

### Examples

### 1) Preparation of a liquid polymerizable composition comprising ZrO₂ nanoparticles dispersed in 2-(2-Oxo-1-imidazolidinyl) ethyl methacrylate.

2-(2-Oxo-1-imidazolidinyl) ethyl methacrylate (25 wt. % in methyl methacrylate) was provided from Aldrich: CAS 86261-90-7. 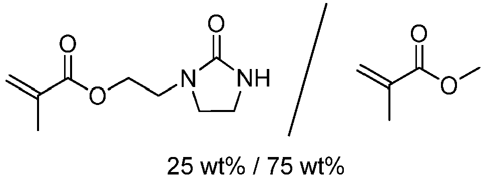 General method for the preparation of hybrid materials with ZrO₂:
Various polymerizable compositions were prepared by adding the various amounts of ZrO₂ (see Table 1) from a solution of ZrO₂/MeOH (30 wt% in MeOH, commercially available from Sakai chemical particle size of 35 nm) to a solution of 2-(2-Oxo-1-imidazolidinyl) ethyl methacrylate (25 wt. % in methyl methacrylate).

MeOH and methyl methacrylate of the resulting composition were evaporated under reduced pressure (some methyl methacrylate remained in the solution as indicated in table 1).

The obtained compositions were applied between two glass plates separated by a spacer of 500µm. Photopolymerization was performed after addition of 1 wt% of a radical photoinitiator (Irgacure184, BASF) and illumination with a Hg lamp during 10 min (16 mW.cm⁻²). Photopolymerization was induced between two glass substrates to avoid the inhibition by oxygen. A siliconspacer of 500µm was used between the two glass substrates. The resulting thickness of the cured material was 500 µm.

When viscosity became too high (ZrO₂ > 60 wt%), sample of 60 µm thickness was prepared by bar coating.

Haze and front scattering of the cured material were measured after demolding with a spectrophotometer UV-Vis (Hitachi U-4100) according to Japanese Industrial Standard No 7136-2000 (equivalent to ISO 14782-1999).

The refractive index n at 594 nm of the cured material was measured after demolding using a Metricon 2010M (prism coupling method).

The transmittance T (at 400 nm) of the cured material was measured after demolding with a spectrophotometer UV-Vis (Hitachi U-4100).

The refractive index n at 594 nm, δ n, Abbe number, transmittance T at 400 nm, Haze at various wavelengths and Front scattering of the resulting materials are indicated in table 1.

**Table 1**

| **Optical properties** | ***Z*rO2/Imidazolidinone/Methylmethacrylate (relative amounts in wt%)** | | | | | | | |
|---|---|---|---|---|---|---|---|---|
| | ***0*/*95*/*5*** | ***19*/*77*/*4*** | ***29*/*66*/*5*** | ***37*/*55*/*8*** | ***43*/*43*/*14*** | ***52*/*34*/*14*** | ***64*/*28*/*8*** | ***70*/*17*/*13*** |
| **Refractive index at 594 nm** | 1.495 | 1.523 | 1.540 | 1.562 | 1.582 | 1.606 | 1.668 | 1.744 |
| **δn** | - | 0.028 | 0.045 | 0.067 | 0.087 | 0.111 | 0.173 | 0.249 |
| **Abbe Number** | 52 | 48 | 41 | 47 | 41 | 38 | 41 | 28 |
| **T (400 nm)** | 81% | 64% | 71% | 65% | 73% | 67% | - | - |
| ***Haze*** | | | | | | | | |
| **390 nm** | 0.27% | 2.4% | 2.0% | 1.0% | 0.77% | 1.6% | - | - |
| **435 nm** | 0.22% | 2.1% | 1.7% | 0.80% | 0.56% | 1.3% | - | - |
| **545 nm** | 0.18% | 1.7% | 1.4% | 0.55% | 0.33% | 1.0% | - | - |
| **655 nm** | 0.17% | 1.4% | 1.3% | 0.46% | 0.24% | 0.86% | - | - |
| **Front scattering 400 - 800 nm** | 0.52% | 1.9% | 1.9% | 0.87% | 0.77% | 1.3% | - | - |

The data of table 1 shows that the refractive index of the polymer was increased by 0.249 at 594 nm with the addition of 70 wt% of ZrO₂ nanoparticles.

Furthermore, the refractive index of the polymer increases with increasing amounts of ZrO₂ nanoparticles. The maximum refractive index obtained is 1.744 at 594 nm with 70 wt% of ZrO₂ nanoparticles.

Up to 52 wt% of ZrO₂, haze is below 5%, which indicates that the nanoparticles are homogeneously dispersed in the polymer.

Materials with ZnS instead of ZrO₂ were also prepared by adding coated ZnS nanoparticles as prepared in example 5 and then by removing methylmethacrylate by evaporation under vacuum, as described previously.

The refractive index n at 594 nm, δ n, Abbe number, transmittance T at 400 nm, Haze at various wavelengths and Front scattering of the resulting materials are indicated in table 2.

**Table 2**

| Optical properties | **ZnS/Imidazolidinone/Methylmethacrylate (relative amounts in wt%)** | | | |
|---|---|---|---|---|
| | ***0*/*95*/*5*** | ***10*/*80*/*10*** | ***34*/*50*/*16*** | **5*5*/*27*/*19*** |
| **Refractive index at 594 nm** | 1.495 | 1.545 | 1.591 | 1.647 |
| **δn** | - | 0.05 | 0.096 | 0.152 |
| **Abbe Number** | 52 | 44 | 44 | 28 |
| **T (400 nm)** | 81% | 77% | 78% | 71% |
| ***Haze*** | | | | |
| **390 nm** | 0.27% | 1.4% | 1.4% | 8.4% |
| **435 nm** | 0.22% | 2.1% | 1.7% | 8.9% |
| **545 nm** | 0.18% | 3.5% | 2.6% | 10% |
| **655 nm** | 0.17% | 4.6% | 3.3% | 11% |
| ***Front scattering*** | | | | |
| **400 - 800 nm** | 0.52% | 3.9% | 3.7% | 11% |

The data of table 2 shows that the refractive index of the polymer may be increased by 0.152 at 594 nm with the addition of 55 wt % of ZnS.

Furthermore, the refractive index of the polymer increases with increasing amounts of ZnS nanoparticles. The maximum refractive index obtained is 1.647 at 594 nm with 55 wt% of ZnS nanoparticles.

Up to 34wt% of ZnS, haze is below 5%, which indicates that the nanoparticles are homogeneously dispersed in the polymer.

It was further found that ZnS and ZrO₂ could not be dispersed into methylmethacrylate. This clearly indicates that the imidazolidinone moiety acts as the dispersing moiety.

### 2) Preparation of a liquid polymerizable composition comprising ZrO₂ nanoparticles dispersed in 2-{[methyl(phenyl)carbamoyl]amino}ethylmethacrylate.

2-Isocyanatoethyl methacrylate (CAS 30674-80-7) and N-methylaniline (CAS 100-61-8) were provided from Aldrich.

Nucleophilic addition of N-methylaniline on 2-isocyanoethylmethacrylate leads to the formation of 2-{[methyl(phenyl)carbamoyl]amino}ethylmethacrylate according to the scheme below:

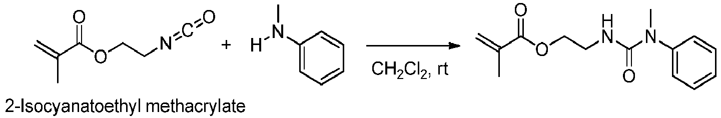

To a solution of N-methylaniline (yellow liquid, 1 equiv, 100 mg, 0.935 mmol, 0.101 mL) in CH₂Cl₂ (1 mL) was added 2-isocyaoethylmethacrylate dropwise (1 equiv, 145 mg, 0.935 mmol, 0.132 mL). The obtained solution was stirred at room temperature for 5 hours. Then CH₂Cl₂ was evaporated under reduced pressure to give the target compound wich was further used without any purification.

Then, two compositions containing various amounts of ZrO₂ nanoparticles (15 wt% and 48 wt%) were prepared by adding to the above obtained solution a suspension of ZrO₂/MeOH (30 wt% in MeOH, commercially available from Sakai chemical), and then adding to these mixtures 2 mg of Irgacure 184 (a radical photoinitiator marketed by BASF). The methanol of the resulting composition was evaporated under reduced pressure.

Then, each composition was applied between two glass plates separated by a spacer of 500µm. Photopolymerization was performed by illumination with a Hg lamp during 10 min (16 mW.cm⁻²). Photopolymerization was induced between two glass substrates to avoid the inhibition by oxygen. A Silicon spacer of 500 µm was used between the two glass substrates.

The refractive index n at 594 nm, δ n, Abbe number, transmittance T at 400 nm, Haze at various wavelengths and Front scattering of the resulting materials are indicated in table 3.

**Table 3**

| | **Amount of nanoparticles dispersed (wt%)** | | |
|---|---|---|---|
| ***Optical properties*** | ***0 wt%*** | ***15 wt%*** | ***48 wt%*** |
| **Refractive index at 594 nm** | 1.573 | 1.590 | 1.648 |
| **δn** | - | 0.017 | 0.075 |
| **Abbe number** | 36 | 37 | 36 |
| **T (400 nm)** | 71% | 71% | |

| ***Haze*** | | | |
|---|---|---|---|
| **390 nm** | 4.2% | 0.94% | |
| **435 nm** | 3.8% | 0.82% | |
| **545 nm** | 3.4% | 0.69% | |
| **655 nm** | 3.1% | 0.63% | |

| ***Front scattering*** | | | |
|---|---|---|---|
| **400 - 800 nm** | 3.5% | 1.0% | |

The data of table 3 shows that the refractive index of the polymer may be increased by 0.075 at 594 nm with the addition of 48 wt % of ZrO₂ nanoparticles compared with the same polymer without nanoparticles.

Furthermore, the refractive index of the polymer increases with increasing amounts of ZrO₂ nanoparticles. The maximum refractive index obtained is 1.648 at 594 nm with 48 wt% of ZrO₂ nanoparticles.

Up to 15 wt% of ZrO₂, haze is below 5 %, which indicates that the nanoparticles are homogeneously dispersed in the monomer.

### 3) Preparation of a liquid polymerizable composition comprising ZrO₂ nanoparticles dispersed in 2-{[methoxycarbonyl]amino}ethylmethacrylate.

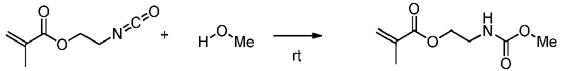

To MeOH (1 mL) was added 2-isocyaoethylmethacrylate dropwise (208 mg, 0.933 mmol, 0.11 mL). The corresponding solution was stirred at room temperature for 5 hours then Irg 184 (2 mg) and the desired amount of ZrO₂ (30 wt% in methanol) were added. MeOH was evaporated under *vacuum* and the corresponding hybrid materials were prepared by photopolymerization (16 mW.cm⁻²) for 10 min.

The refractive index n at 594 nm, δ n, Abbe number, transmittance T at 400 nm, Haze at various wavelengths and Front scattering of the resulting materials are indicated in table 4.

**Table 4**

| | **Amount of nanoparticles dispersed (wt%)** | | | |
|---|---|---|---|---|
| ***Optical properties*** | ***0 wt%*** | ***11.5 wt%*** | ***21 wt%*** | ***31 wt%*** |
| **594 nm** | 1.504 | 1.517 | 1.536 | 1.552 |
| **δn** | - | 0.013 | 0.032 | 0.048 |
| **Abbe Number** | 52 | 51 | 49 | 49 |
| **T (400 nm)** | 89% | 79% | 71% | 54% |
| ***Haze*** | | | | |
| **390 nm** | 1.3% | 1.5% | 1.5% | 13% |
| **435 nm** | 1.0% | 1.1% | 1.2% | 11% |
| **545 nm** | 0.60% | 0.69% | 0.68% | 7.9% |
| **655 nm** | 0.38% | 0.47% | 0.46% | 6.4% |
| ***Front scattering*** | | | | |
| **400 - 800 nm** | 0.99% | 1.1% | 1.1% | 7.9% |

The data of table 5 shows that the refractive index of the polymer may be increased by 0.048 at 594 nm with the addition of 31 wt % of ZrO₂ nanoparticles compared with the same polymer without nanoparticles. Furthermore, the refractive index of the polymer increases with increasing amounts of ZrO₂ nanoparticles. The maximum refractive index obtained is 1.552 at 594 nm with 31 wt% of ZrO₂ nanoparticles.

Up to 21 wt% of ZrO₂, haze is below 5 %, which indicates that the nanoparticles are homogeneously dispersed in the monomer.

### 4) Preparation of a liquid polymerizable composition comprising ZrO₂ nanoparticles dispersed in a bifunctional monomer.

3-phenylthio-1,2-propanediol (CAS: 5149-48-4) was provided from Aldrich.

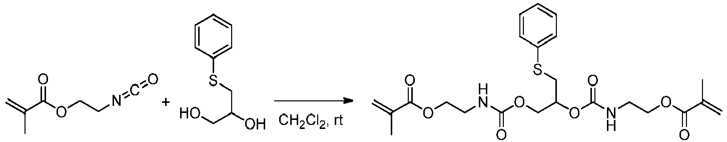

To a solution of 3-phenylthio-1,2-propanediol (0.4 equiv, 98.0 mg, 0.532 mmol) in CH₂Cl₂ (1 mL, not soluble) was added 2-isocyaoethylmethacrylate dropwise (1 equiv, 206 mg, 1.33 mmol, 0.188 mL). The obtained solution was stirred at room temperature overnight. After evaporation of CH₂Cl₂ under vacuum, 314 mg of a white solid was obtained. It could be dissolved by adding 37 mg of N,N-DMAA (10 wt%).

Then, three compositions containing various amounts of ZrO₂ nanoparticles (24 wt%, 39 wt% and 49 wt% of ZrO₂) were prepared by adding to the above obtained solution a suspension of ZrO₂/MeOH (30 wt% in MeOH, commercially available from Sakai chemical), and then adding to this mixture 2 mg of Irgacure 184 (a radical photoinitiator marketed by BASF). The methanol of the resulting composition was evaporated under reduced pressure.

Then, each composition was applied between two glass plates separated by a spacer of 500µm. Photopolymerization was performed by illumination with a Hg lamp during 10 min (16 mW.cm⁻²). Photopolymerization was induced between two glass substrates to avoid the inhibition by oxygen. A Silicon spacer of 500µm was used between the two glass substrates.

The refractive index n at 594 nm δ n, Abbe number, transmittance T at 400 nm, Haze at various wavelengths and front scattering of the resulting materials are indicated in table 5.

**Table 5**

| | **Amount of nanoparticles dispersed (wt%) into a mixture monomer/N,N-DMAA (weight ratio = 9/1)** | | | |
|---|---|---|---|---|
| Optical properties | 0 wt% | 24 wt% | 39 wt% | 49 wt% |
| Refractive index at 594 nm | 1.550 | 1.572 | 1.601 | 1.619 |
| 8n | - | 0.022 | 0.051 | 0.069 |
| Abbe Number | 44 | 37 | 43 | 41 |
| T (400 nm) | 81% | 74% | 58% | 57% |
| Haze | | | | |
| 390 nm | 10% | 6.2% | 7.0% | 9.1% |
| 435 nm | 8.6% | 4.9% | 5.5% | 7.3% |
| 545 nm | 6.0% | 3.3% | 3.6% | 4.7% |
| 655 nm | 4.5% | 2.4% | 2.5% | 3.4% |
| Front scattering | | | | |
| 400 - 800 nm | 7.1% | 4.4% | 4.5% | 5.7% |

The data of table 5 shows that the refractive index of the polymer may be increased by 0.069 at 594 nm with the addition of 49 wt % of ZrO₂ nanoparticles compared with the same polymer without nanoparticles. Furthermore, the refractive index of the polymer increases with increasing amounts of ZrO₂ nanoparticles. The maximum refractive index obtained is 1.619 at 594 nm with 49 wt% of ZrO₂ nanoparticles.

Up 40 wt% of ZrO₂, haze is below 5 %, which indicates that the nanoparticles are homogeneously dispersed in the monomer.

### 5) Preparation of ZnS nanoparticles coated with a thiol-containing compound.

Zn(OAc)₂, the capping agent and thiourea (TUA) are dissolved in DMF. The solution is heated under reflux at 160 °C under nitrogen atmosphere. At the end of the heating process, a transparent solution is obtained. The solution is poured in methanol, acetonitrile or water to induce the precipitation of the ZnS nanoparticles. Nanoarticles of ZnS are separated from the solution by centrifugation and washed with methanol or acetonitrile twice. The powder is dryed under vacuum for 10 hours.

The capping agents used in this experiment are mercaptoethanol (ME) (CAS: 60-24-2), and thiophenol (PhS) (CAS: 108-98-5).

The relative molar amounts of Zn(OAc)₂, the capping agent and thiourea are indicated in table 1.

The amount of capping agent is choosen so that during reflux and after cooling of the mixture, no self-precipitation occurs. Relative molar amounts leading to a stable dispersion are indicated in table 6.

**Table 6**

| Compound | Relative molar amounts |
|---|---|
| ME | 0.6 |
| PhS | 0.3 |
| Zn(OAc)2 | 1 |
| TUA | 1.65 |

The mean crystal size of the ZnS nanoparticles (without coating) was determined according to the Williamson-Hall method. The mean crystal size of the ZnS nanoparticles was evaluated at 3.58 nm with a relative dispersion of 4.5% (measured by XR diffraction).

The particle size of the coated ZnS nanoparticles was measured using Horiba SZ-100 size measurement instrument after cooling of the dispersion in DMF. The results show a particle size of around 7 nm with a narrow distribution size going from 4 to 14 nm. This small particle size and narrow distribution size allow the limitation of light scattering in the final composite.

### 6) Preparation of a liquid polymerizable composition comprising ZnS nanoparticles dispersed in N-methylphenylacrylamide (N,N-MPAA).

To a solution of N-methylaniline (3.00 mL, 27.7 mmol, 1 equiv) and triethylamine (3.86 mL, 27.7 mmol, 1 equiv) in THF at 0°C was added acryloyl chloride (2.25 mL, 27.7 mmol, 1 equiv) dropwise. After one night at room temperature, the reaction mixture was coinched by a saturated solution of NH₄Cl. The phases were separated and the aqueous phase was extracted 2 times with diethylether. The organic phases were collected, dried over MgSO₄ and filtered. The crude was purified by recrystallization using hexane as the solvent. 1.79 g (40% yield) of N,N-MethylPhenylAcrylAmide was obtained as a white solid.

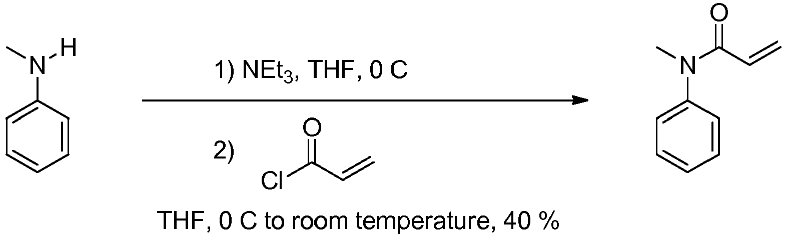

N,N-DMAA was added to N,N-MPAA in order to form a liquid polymerizable composition. The relative amounts of N,N-DMAA and N,N-MPAA are indicated in table 7.

Four compositions containing various amounts of coated ZnS nanoparticles (50 wt%, 60 wt%, 70 wt% and 75 wt%) were prepared by adding to the above obtained composition coated ZnS nanoparticles, as prepared in example 5, and then adding to this mixture 3 wt% of Irgacure 184 (a radical photoinitiator marketed by BASF).

Then, each composition was applied between two glass plates separated by a spacer of 500 µm. Photopolymerization was performed by illumination with a Hg lamp during 10 min (16 mW.cm⁻²). Photopolymerization was induced between two glass substrates to avoid the inhibition by oxygen. A Silicon spacer of 500µm was used between the two glass substrates. For the composition with 75 wt% of ZnS, a 60 µm thick sample was made by bar coating.

The refractive index n at 594 nm δ n, Abbe number, transmittance T at 400 nm, Haze at various wavelengths and front scattering of the resulting hybrid materials are indicated in table 7.

**Table 7**

| | | **Amount of nanoparticles dispersed (wt%)** | | | | |
|---|---|---|---|---|---|---|
| ***Coated ZnS*/*N,N-DMAA*/*N,N-MPAA (relative amounts expressed in wt%)*** | ***0*/*100*/*0*** | ***50***/***50***/***0*** | ***50*/*25*/*25*** | ***60*/*20*/*20*** | ***70*/*15*/*15*** | ***75*/*12.5*/ *12.5*** |
| **Refractive index at 594 nm** | 1.511 | 1.620 | 1.650 | 1.668 | 1.698 | 1.768 |
| **8n** | - | 0.109 | 0.139 | 0.157 | 0.187 | 0.257 |
| **Abbe Number** | 45 | 31 | 28 | 27 | 26 | 24 |
| **T (400 nm)** | 91% | 79% | 76% | 66% | 57% | |
| ***Haze*** | | | | | | |
| **392 nm** | 0.6% | 2.3% | 3.4% | 5.3% | 10% | |
| **436 nm** | 0.6% | 1.8% | 2.6% | 4.4% | 8.8% | |
| **544 nm** | 0.6% | 1.4% | 2.1% | 3.5% | 7.1% | |
| **653 nm** | 0.7% | 1.2% | 1.8% | 3.1% | 6.2% | |

The data of table 7 shows that the addition of N,N-MPAA to N,N-DMAA as a 1/1 mixture allows to reach higher refractive indexes compared to the materials containing only N,N-DMAA and ZnS nanoparticles:
- regarding the mixture ZnS/N,N-DMAA/N,N-MPAA = 50/50/0: n = 1.620 at 594 nm;
- regarding the mixture ZnS/N,N-DMAA/N,N-MPAA = 50/25/25: n = 1.650 at 594 nm.

The refractive index of the polymer may be increased by 0.257 at 594 nm with the addition of 75 wt % of ZnS nanoparticles to a 1/1 mixture of N,N-DMAA/N,NMPAA compared with poly N,N-DMAA without nanoparticles.

Furthermore, the refractive index of the polymer increases with increasing amounts of ZnS nanoparticles. The maximum refractive index obtained is 1.768 at 594 nm with 75 wt% of ZnS nanoparticles in a 1/1 mixture of N,N-DMAA/N,NMPAA.

Up to 60 wt% of ZnS in a 1/1 mixture of N,N-DMAA/N,NMPAA, haze is below 5%, which indicates that the nanoparticles are homogeneously dispersed in the polymer.

### 7) Preparation of a liquid polymerizable composition comprising ZrO₂ nanoparticles dispersed in N,N-DiMethylAcrylAmide (N,N-DMAA).

According to the same method than the one described in example 5, ZrO₂ nanoparticles were dispersed in N,N-DMAA. The results are indicated in Table 8 below.

**Table 8**

| **Amount of nanoparticles dispersed (wt%)** | | | | | | | |
|---|---|---|---|---|---|---|---|
| ***Optical properties*** | ***0 wt%*** | ***10 wt%*** | ***20 wt%*** | ***30 wt%*** | ***40 wt%*** | ***50 wt%*** | ***60 wt%*** |
| **594 nm** | 1.511 | 1.523 | 1.537 | 1.552 | 1.570 | 1.587 | 1.619 |
| **δn** | - | 0.012 | 0.026 | 0.041 | 0.059 | 0.076 | 0.108 |
| **Abbe Number** | 45 | 41 | 43 | 41 | 39 | 33 | - |
| **T (400 nm)** | 91% | 79% | 68% | 67% | 71% | 71% | - |
| ***Haze*** | | | | | | | |
| **392 nm** | 0.25% | 0.89% | 1.9% | 3.0% | 6.1% | 12% | - |
| **436 nm** | 0.23% | 0.62% | 1.3% | 2.1% | 5.3% | 11% | - |
| **544 nm** | 0.21% | 0.35% | 0.56% | 1.0% | 4.0% | 9.6% | - |
| **653 nm** | 0.23% | 0.30% | 0.39% | 0.65% | 3.3% | 8.6% | - |

The data of table 8 shows that the refractive index of the polymer may be increased by 0.108 at 594 nm with the addition of 60 wt % of ZrO₂ nanoparticles compared with the same polymer without nanoparticles.

Furthermore, the refractive index of the polymer increases with increasing amounts of ZrO₂ nanoparticles. The maximum refractive index obtained is 1.619 at 594 nm with 60 wt% of ZrO₂ nanoparticles.

Up to 30 wt% of ZrO₂ into N,N-DMAA, haze is below 5 %, which indicates that the nanoparticles are homogeneously dispersed in the monomer.

### 8) Comparative examples

a) 2-(tert-butylamino)ethyl methacrylate (97 %) was provided from Aldrich: CAS 3775-90-4. 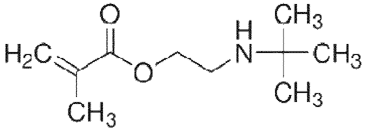 10 wt% of ZrO₂ from a solution of ZrO₂/MeOH (30 wt% in MeOH, commercially available from Sakai chemical) was added to 2-(tert-butylamino)ethyl methacrylate in order to produce polymer/ZrO₂ nanoparticles hybrid materials. Unfortunately, adding the ZrO₂ solutions induced an instantaneous gel.

This amine monomer is not eligible for dispersing ZrO₂.
b) Similarly, it has been found that methylmethacrylate could not disperse ZnS and ZrO₂ nanoparticles.

## Claims

1. A liquid polymerizable composition comprising :
- a liquid monomer composition containing a monomer of formula (I): 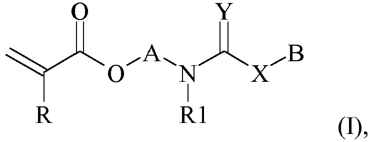 wherein:
R represents a hydrogen atom or a methyl group,
A represents a hydrocarbon chain comprising 1, 2, 3 or 4 carbon atoms,
Y is an oxygen atom or a sulphur atom
X is -O-, -S- or -NR2-,
R1 and R2, identical or different, are a hydrogen atom or a C1-C6 alkyl, and
B represents a C1-C6 alkyl, aryl, heteroaryl, aryl C1-C6alkyl or heteroaryl Cl-C6alkyl,
or B is absent and R1 and X form a 5-membered heterocycle, such as a 2-imidazolidinone, optionally substituted on NH-, 2-oxazolidinone or 2-thiazolidinone,
or B represents: 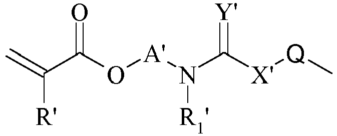
wherein:
R' represents a hydrogen atom or a methyl group,
A' represents a hydrocarbon chain comprising 1, 2, 3 or 4 carbon atoms,
Y' is an oxygen atom or a sulphur atom,
X' is -O-, -S- or -NR2'-,
R1' and R2', identical or different, are a hydrogen atom or a C1-C6 alkyl, and
Q represents a hydrocarbon chain comprising 1, 2, 3 or 4 carbon atoms substituted with an aryl, heteroaryl, aryl Cl-C6alkyl, aryloxy, arylthio, aryl Cl-C10alkyloxy, aryl C1-C10alkylthio, heteroaryl C1-C6alkyl, heteroaryl Cl-C10alkyloxy, or heteroaryl C1-C10alkylthio, and
- mineral nanoparticles homogeneously dispersed in said monomer composition.

2. The liquid polymerizable composition of claim 1, wherein said mineral nanoparticles are chosen among ZnS, ZrO₂, TiO₂ or BaTiO₃.

3. The liquid polymerizable composition of claim 1 or 2, wherein in formula (I), Y is an oxygen atom.

4. The liquid polymerizable composition of claim 1 or 2, wherein in formula (I), Y is a sulphur atom.

5. The liquid polymerizable composition of any one of claims 1 to 4, wherein in formula (I), B is absent and R1 and X form a 2- imidazolidinone, optionally substituted on - NH-, 2-oxazolidinone or 2-thiazolidinone.

6. The liquid polymerizable composition of claim 5, wherein the monomer of formula (I) is the following one:

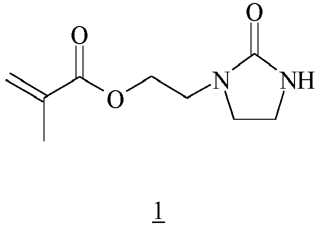

7. The liquid polymerizable composition of any one of claims 1 to 4, wherein in formula (I), Y is an oxygen atom and X is -NH- or Y is an oxygen atom and X is -O-.

8. The liquid polymerizable composition of claim 7, wherein the monomer of formula (I) is one of the following ones: 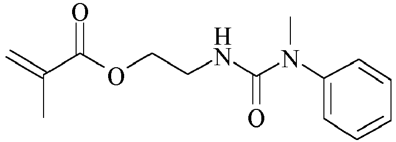 or

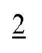

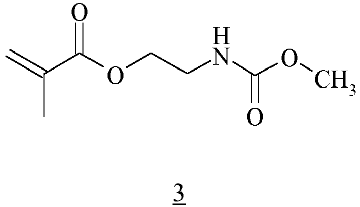

9. The liquid polymerizable composition of any one of claims 1 to 4, wherein in formula (I), B represents: 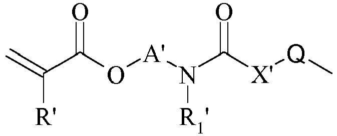 wherein:
R' represents a hydrogen atom or a methyl group, in particular a hydrogen atom,
A' represents a hydrocarbon chain comprising 1, 2, 3 or 4 carbon atoms, in particular is -CH2-CH2,
X' is -O-,
R1' is a hydrogen atom or a C1-C6 alkyl, in particular a hydrogen atom,
Q represents a hydrocarbon chain comprising 1, 2, 3 or 4 carbon atoms substituted with an aryl, heteroaryl, aryl Cl-C6alkyl, aryloxy, arylthio, aryl Cl-C10alkyloxy, aryl C1-C10alkylthio, heteroaryl C1-C6alkyl, heteroaryl Cl-C10alkyloxy, or heteroaryl C1-C10alkylthio.

10. The liquid polymerizable composition of claim 9, wherein the monomer of formula (I) is the following one:

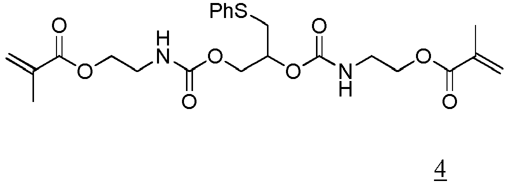

11. The liquid polymerizable composition of anyone claims 1 to 10, wherein said nanoparticles have a particle size less than 50 nm, preferably between 30 nm and 5 nm.

12. The liquid polymerizable composition of any one of claims 1 to 11, wherein said nanoparticles are chosen among of ZnS nanoparticles coated with one or more thiol-containing compounds, such as mercaptoethanol, thiophenol, mercaptophenol, or a mixture thereof.

13. The liquid polymerizable composition of claim 12, wherein said nanoparticles of ZnS are coated with a mixture of mercaptoethanol and thiophenol, preferably with a molar ratio of mercaptoethanol and thiophenol over Zn comprised between 2.0 and 0.1, preferably between 0.6 and 0.3.

14. The liquid polymerizable composition of claim 12, wherein said nanoparticles of ZnS are coated with mercaptoethanol preferably with a molar ratio of mercaptoethanol over ZnS is comprised between 1.3 and 1.6.

15. The liquid polymerizable composition of any one of claims 12 to 14, wherein said nanoparticles of ZnS have crystal size comprised between 3 nm and 10 nm, and the particle size of the nanoparticles of ZnS coated with said thiol-containing compound(s) is comprised between 4 nm and 80 nm.

16. The liquid polymerizable composition of any one of claims 1 to 15, wherein the amount of said mineral nanoparticles in the polymerizable composition is comprised between 5% w/w and 60% w/w, preferably between 10% w/w and 50% w/w, based on the total weight of the liquid polymerizable composition.

17. An optical substrate coated with the liquid composition according to any one of claims 1 to 16.

18. An optical article cured of the liquid composition according to any one of claims 1 to 16.

19. An optical article comprising :
(a) an optical substrate, and
(b) a coating obtained by thermal and/or UV curing of the liquid polymerizable composition according to any one of claims 1 to 16.

20. The optical substrate according to claim 17, wherein the substrate is an ophthalmic lens or an optical lens for optical instrument.

21. The optical article according to claim 18, wherein the article is an ophthalmic lens or an optical lens for optical instrument.

22. Use of mineral nanoparticles for increasing the refractive index of a polymeric material obtained by thermal and/or UV curing of a liquid monomer composition containing a monomer of formula (I): 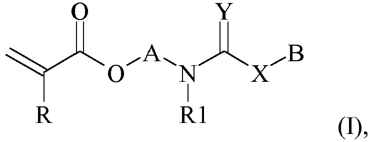 wherein:
R represents a hydrogen atom or a methyl group,
A represents a hydrocarbon chain comprising 1, 2, 3 or 4 carbon atoms,
Y is an oxygen atom or a sulphur atom
X is -O-, -S- or -NR2-,
R1 and R2, identical or different, are a hydrogen atom or a C1-C6 alkyl, and
B represents a C1-C6 alkyl, aryl, heteroaryl, aryl C1-C6alkyl or heteroaryl Cl-C6alkyl,
or B is absent and R1 and X form a 5-membered heterocycle, such as a 2-imidazolidinone, optionally substituted on NH-, 2-oxazolidinone or 2-thiazolidinone
or B represents: 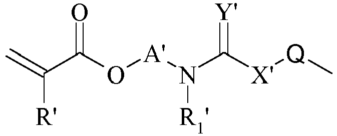
wherein:
R' represents a hydrogen atom or a methyl group,
A' represents a hydrocarbon chain comprising 1, 2, 3 or 4 carbon atoms,
Y' is an oxygen atom or a sulphur atom,
X' is -O-, -S- or -NR2'-,
R1' and R2', identical or different, are a hydrogen atom or a C1-C6 alkyl, and
Q represents a hydrocarbon chain comprising 1, 2, 3 or 4 carbon atoms substituted with aryl, heteroaryl, aryl Cl-C6alkyl, aryloxy, arylthio, aryl Cl-C10alkyloxy, aryl C1-C10alkylthio, heteroaryl C1-C6alkyl, heteroaryl Cl-C10alkyloxy, or heteroaryl C1-C10alkylthio,
wherein said mineral nanoparticles are homogeneously dispersed in said monomer composition.

23. Use according to claim 22, wherein said mineral nanoparticles are chosen among ZnS,
ZrO₂, TiO₂ or BaTiO₃.

## Patentansprüche

1. Flüssige polymerisierbare Zusammensetzung, umfassend:
- eine flüssige Monomerzusammensetzung, die Monomer der Formel (I) enthält: 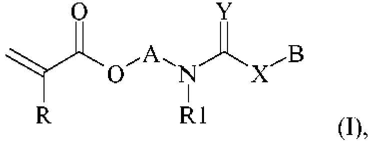 wobei:
R für ein Wasserstoffatom oder eine Methylgruppe steht,
A für eine Kohlenwasserstoffkette steht, die 1, 2, 3 oder 4 Kohlenstoffatome umfasst,
Y ein Sauerstoffatom oder ein Schwefelatom ist;
X -0-, -S- oder -NR2- ist,
R1 und R2 gleich oder unterschiedlich sind und ein Wasserstoffatom oder ein C1-C6-Alkyl sind, und
B für ein C1-C6-Alkyl, Aryl, Heteroaryl, Aryl-C1-C6-alkyl oder Heteroaryl-C1-C6-alkyl steht, oder B fehlt und R1 und X einen 5-gliedrigen Heterocyclus bilden, wie ein 2-Imidazolidinon, das gegebenenfalls an -NH- substituiert ist, 2-Oxazolidinon oder 2-Thiazolidinon,
oder B für folgendes steht: 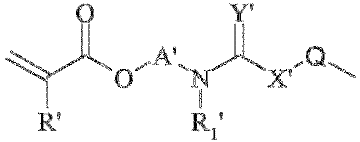
wobei:
R' für ein Wasserstoffatom oder eine Methylgruppe steht,
A' für eine Kohlenwasserstoffkette steht, die 1, 2, 3 oder 4 Kohlenstoffatome umfasst,
Y' ein Sauerstoffatom oder ein Schwefelatom ist,
X' -O-, -S- oder -NR2'- ist,
R1' und R2' gleich oder unterschiedlich sind und ein Wasserstoffatom oder C1-C6-Alkyl sind,
und
Q für eine Kohlenwasserstoffkette steht, die 1, 2, 3 oder 4 Kohlenstoffatome umfasst, substituiert mit einem Aryl, Heteroaryl, Aryl-C1-C6-alkyl, Aryloxy, Arylthio, Aryl-C1-C10-alkyloxy, Aryl-C1-C10-alkylthio, Heteroaryl-C1-C6-alkyl, Heteroaryl-C1-C10-alkyloxy oder Heteroaryl-C1-C10-alkylthio, und
- mineralische Nanopartikel, die homogen in der Monomerzusammensetzung dispergiert sind.

2. Flüssige polymerisierbare Zusammensetzung nach Anspruch 1, wobei die mineralischen Nanopartikel ausgewählt sind aus ZnS, ZrO₂, TiO₂ oder BaTiO₃.

3. Flüssige polymerisierbare Zusammensetzung nach Anspruch 1 oder 2, wobei Y in Formel (I) ein Sauerstoffatom ist.

4. Flüssige polymerisierbare Zusammensetzung nach Anspruch 1 oder 2, wobei Y in Formel (I) ein Schwefelatom ist.

5. Flüssige polymerisierbare Zusammensetzung nach einem der Ansprüche 1 bis 4, wobei B in Formel (I) fehlt und R1 und X ein 2-Imidazolidinon, das gegebenenfalls am -NH- substituiert ist, 2-Oxazolidinon oder 2-Thiazolidinon bilden.

6. Flüssige polymerisierbare Zusammensetzung nach Anspruch 5, wobei das Monomer der Formel (I) das folgende ist:

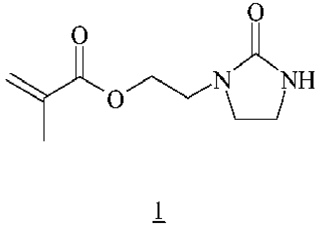

7. Flüssige polymerisierbare Zusammensetzung nach einem der Ansprüche 1 bis 4, wobei Y in Formel (I) ein Sauerstoffatom ist und X -NH- ist, oder Y ein Sauerstoffatom ist und X -0- ist.

8. Flüssige polymerisierbare Zusammensetzung nach Anspruch 7, wobei das Monomer der Formel (I) eines der folgenden ist:

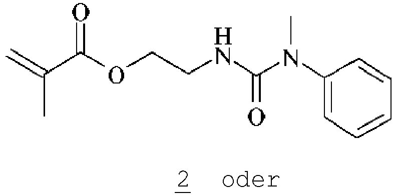

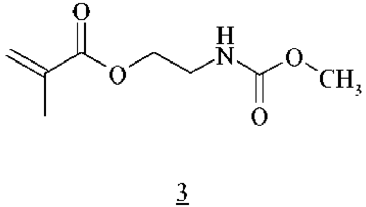

9. Flüssige polymerisierbare Zusammensetzung nach einem der Ansprüche 1 bis 4, wobei B in Formel (I) für folgendes steht: 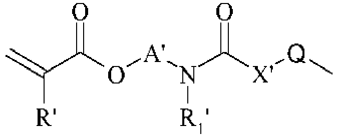 wobei:
R' für ein Wasserstoffatom oder eine Methylgruppe steht, insbesondere ein Wasserstoffatom,
A' für eine Kohlenwasserstoffkette steht, die 1, 2, 3 oder 4 Kohlenstoffatome umfasst, die insbesondere -CH2-CH2 ist,
X' -0- ist,
R1' für ein Wasserstoffatom oder C1-C6-Alkyl steht, insbesondere ein Wasserstoffatom,
Q für eine Kohlenwasserstoffkette steht, die 1, 2, 3 oder 4 Kohlenstoffatome umfasst, substituiert mit einem Aryl, Heteroaryl, Aryl-C1-C6-alkyl, Aryloxy, Arylthio, Aryl-C1-C10-alkyloxy, Aryl-C1-C10-alkylthio, Heteroaryl-C1-C6-alkyl, Heteroaryl-C1-C10-alkyloxy oder Heteroaryl-C1-C10-alkylthio.

10. Flüssige polymerisierbare Zusammensetzung nach Anspruch 9, wobei das Monomer der Formel (I) das folgende ist:

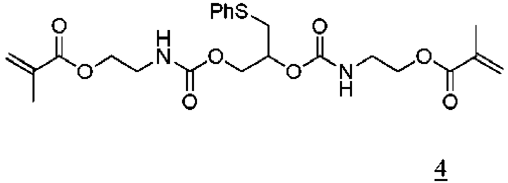

11. Flüssige polymerisierbare Zusammensetzung nach einem der Ansprüche 1 bis 10, wobei die Nanopartikel eine Partikelgröße von weniger als 50 nm, vorzugsweise zwischen 30 nm und 5 nm aufweisen.

12. Flüssige polymerisierbare Zusammensetzung nach einem der Ansprüche 1 bis 11, wobei die Nanopartikel ausgewählt sind aus ZnS-Nanopartikeln, die mit einer oder mehreren thiolhaltigen Verbindungen beschichtet sind, wie Mercaptoethanol, Thiophenol, Mercaptophenol oder einer Mischung davon.

13. Flüssige polymerisierbare Zusammensetzung nach Anspruch 12, wobei die Nanopartikel von ZnS mit einer Mischung aus Mercaptoethanol und Thiophenol beschichtet sind, vorzugsweise mit einem Molverhältnis von Mercaptoethanol und Thiophenol zu Zn, das zwischen 2,0 und 0,1, vorzugsweise zwischen 0,6 und 0,3 liegt.

14. Flüssige polymerisierbare Zusammensetzung nach Anspruch 12, wobei die Nanopartikel von ZnS mit Mercaptoethanol beschichtet sind, vorzugsweise mit einem Molverhältnis von Mercaptoethanol zu ZnS, das zwischen 1,3 und 1,6 liegt.

15. Flüssige polymerisierbare Zusammensetzung nach einem der Ansprüche 12 bis 14, wobei die Nanopartikel von ZnS eine Kristallgröße aufweisen, die zwischen 3 nm und 10 nm liegt, und die Partikelgröße der Nanopartikel von ZnS, die mit der thiolhaltigen Verbindung/den thiolhaltigen Verbindungen beschichtet sind, zwischen 4 nm und 80 nm liegt.

16. Flüssige polymerisierbare Zusammensetzung nach einem der Ansprüche 1 bis 15, wobei die Menge der mineralischen Nanopartikel in der polymerisierbaren Zusammensetzung zwischen 5 % Gew./Gew. und 60 % Gew./Gew. liegt, vorzugsweise zwischen 10 % Gew./Gew. und 50 % Gew./Gew., bezogen auf das Gesamtgewicht der flüssigen polymerisierbaren Zusammensetzung.

17. Optisches Substrat, das mit der flüssigen Zusammensetzung gemäß einem der Ansprüche 1 bis 16 beschichtet ist.

18. Optischer Gegenstand, der aus der flüssigen Zusammensetzung gemäß einem der Ansprüche 1 bis 16 gehärtet ist.

19. Optischer Artikel, umfassend:
(a) ein optisches Substrat und
(b) eine Beschichtung, die durch thermisches und/oder UV-Härten der flüssigen polymerisierbaren Zusammensetzung gemäß einem der Ansprüche 1 bis 16 erhalten wird.

20. Optisches Substrat nach Anspruch 17, wobei das Substrat eine ophthalmische Linse oder eine optische Linse für ein optisches Instrument ist.

21. Optischer Artikel nach Anspruch 18, wobei der Artikel eine ophthalmische Linse oder eine optische Linse für ein optisches Instrument ist.

22. Verwendung von mineralischen Nanopartikeln zum Erhöhen des Brechungsindex eines polymeren Materials, das durch thermisches und/oder UV-Härten einer flüssigen Monomerzusammensetzung erhalten wird, die Monomer der Formel (I) enthält: 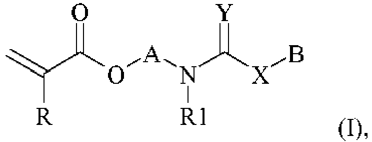 wobei:
R für ein Wasserstoffatom oder eine Methylgruppe steht,
A für eine Kohlenwasserstoffkette steht, die 1, 2, 3 oder 4 Kohlenstoffatome umfasst,
Y ein Sauerstoffatom oder ein Schwefelatom ist; X -0-, -S- oder -NR2- ist,
R1 und R2 gleich oder unterschiedlich sind und ein Wasserstoffatom oder C1-C6-Alkyl sind, und
B für C1-C6-Alkyl, Aryl, Heteroaryl, Aryl-C1-C6-alkyl oder Heteroaryl-C1-C6-alkyl steht, oder B fehlt und R1 und X einen 5-gliedrigen Heterocyclus bilden, wie ein 2-Imidazolidinon, das gegebenenfalls an -NH- substituiert ist, 2-Oxazolidinon oder 2-Thiazolidinon,
oder B für folgendes steht: 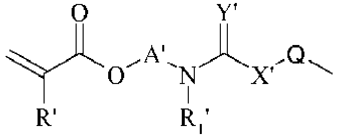
wobei:
R' für ein Wasserstoffatom oder eine Methylgruppe steht,
A' für eine Kohlenwasserstoffkette steht, die 1, 2, 3 oder 4 Kohlenstoffatome umfasst,
Y' ein Sauerstoffatom oder ein Schwefelatom ist,
X' -O-, -S- oder -NR2'- ist,
R1' und R2' gleich oder unterschiedlich sind und ein Wasserstoffatom oder C1-C6-Alkyl sind, und
Q für eine Kohlenwasserstoffkette steht, die 1, 2, 3 oder 4 Kohlenstoffatome umfasst, substituiert mit Aryl, Heteroaryl, Aryl-C1-C6-alkyl, Aryloxy, Arylthio, Aryl-C1-C10-alkyloxy, Aryl-C1-C10-alkylthio, Heteroaryl-C1-C6-alkyl, Heteroaryl-C1-C10-alkyloxy oder Heteroaryl-C1-C10-alkylthio,
wobei die mineralischen Nanopartikel homogen in der Monomerzusammensetzung dispergiert sind.

23. Verwendung nach Anspruch 22, wobei die mineralischen Nanopartikel ausgewählt sind aus ZnS, ZrO₂, TiO₂ oder BaTiO₃.

## Revendications

1. Composition liquide polymérisable comprenant :
- une composition liquide de monomère contenant un monomère de formule (I) : 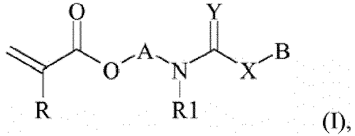 dans laquelle :
R représente un atome d'hydrogène ou un groupe méthyle,
A représente une chaîne hydrocarbonée comprenant 1, 2, 3 ou 4 atomes de carbone,
Y est un atome d'oxygène ou un atome de soufre,
X est -0-, -S- ou -NR2-,
R1 et R2, identiques ou différents, sont un atome d'hydrogène ou un alkyle en C1-C6, et
B représente un groupe alkyle en C1-C6, aryle, hétéroaryle, aryl-alkyle en C1-C6 ou hétéroaryl-alkyle en C1-C6,
ou bien B est absent et R1 et X forment un hétérocycle à 5 chaînons, tel qu'une 2-imidazolidinone, éventuellement substituée sur -NH-, une 2-oxazolidinone ou une 2-thiazolidinone,
ou bien B représente : 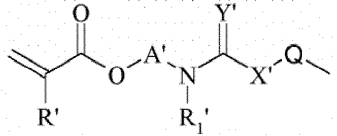
dans lequel :
R' représente un atome d'hydrogène ou un groupe méthyle,
A' représente une chaîne hydrocarbonée comprenant 1, 2, 3 ou 4 atomes de carbone,
Y' est un atome d'oxygène ou un atome de soufre,
X' est -0-, -S- ou -NR2'-,
R1' et R2', identiques ou différents, sont un atome d'hydrogène ou un alkyle en C1-C6, et
Q représente une chaîne hydrocarbonée comprenant 1, 2, 3 ou 4 atomes de carbone substituée par un groupe aryle, hétéroaryle, aryl-alkyle en C1-C6, aryloxy, arylthio, aryl(alkyl en C1-C10)oxy, aryl(alkyl en C1-C10)thio, hétéroaryl-alkyle en C1-C6, hétéroaryl(alkyl en C1-C10)oxy, ou hétéroaryl(alkyl en C1-C10)thio, et
- des nanoparticules minérales dispersées de façon homogène dans ladite composition de monomère.

2. Composition liquide polymérisable de la revendication 1, dans laquelle lesdites nanoparticules minérales sont choisies parmi ZnS, ZrO₂, TiO₂ ou BaTiO₃.

3. Composition liquide polymérisable de la revendication 1 ou 2, dans laquelle dans la formule (I), Y est un atome d'oxygène.

4. Composition liquide polymérisable de la revendication 1 ou 2, dans laquelle dans la formule (I), Y est un atome de soufre.

5. Composition liquide polymérisable de l'une quelconque des revendications 1 à 4, dans laquelle dans la formule (I), B est absent et R1 et X forment une 2-imidazolidinone, éventuellement substituée sur -NH-, une 2-oxazolidinone ou une 2-thiazolidinone.

6. Composition liquide polymérisable de la revendication 5, dans laquelle le monomère de formule (I) est le suivant :

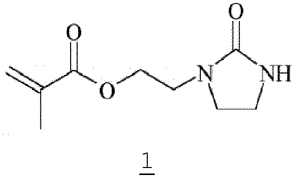

7. Composition liquide polymérisable de l'une quelconque des revendications 1 à 4, dans laquelle dans la formule (I), Y est un atome d'oxygène et X est -NH- ou bien Y est un atome d'oxygène et X est -O-.

8. Composition liquide polymérisable de la revendication 7, dans laquelle le monomère de formule (I) est un des suivantes : 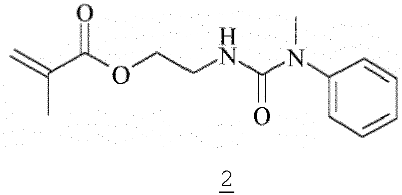 ou

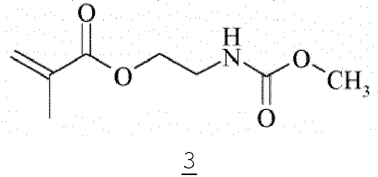

9. Composition liquide polymérisable de l'une quelconque des revendications 1 à 4, dans laquelle dans la formule (I), B représente : 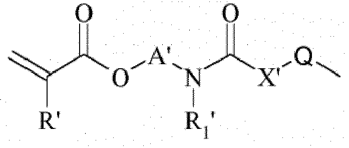 dans lequel :
R' représente un atome d'hydrogène ou un groupe méthyle, en particulier un atome d'hydrogène,
A' représente une chaîne hydrocarbonée comprenant 1, 2, 3 ou 4 atomes de carbone, en particulier est -CH2-CH2,
X' est -0-,
R1' est un atome d'hydrogène ou un alkyle en C1-C6, en particulier un atome d'hydrogène,
Q représente une chaîne hydrocarbonée comprenant 1, 2, 3 ou 4 atomes de carbone substituée par un groupe aryle, hétéroaryle, aryl-alkyle en C1-C6, aryloxy, arylthio, aryl(alkyl en C1-C10)oxy, aryl(alkyl en C1-C10)thio, hétéroaryl-alkyle en C1-C6, hétéroaryl(alkyl en C1-C10)oxy, ou hétéroaryl(alkyl en C1-C10)thio.

10. Composition liquide polymérisable de la revendication 9, dans laquelle le monomère de formule (I) est le suivant :

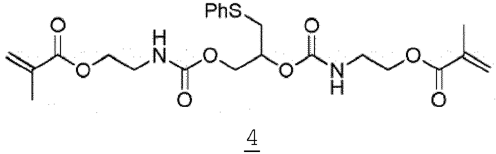

11. Composition liquide polymérisable de l'une quelconque des revendications 1 à 10, dans laquelle lesdites nanoparticules ont une taille de particules inférieure à 50 nm, de préférence entre 30 nm et 5 nm.

12. Composition liquide polymérisable de l'une quelconque des revendications 1 à 11, dans laquelle lesdites nanoparticules sont choisies parmi des nanoparticules de ZnS enrobées d'un ou plusieurs composés contenant un thiol, tels que le mercaptoéthanol, le thiophénol, le mercaptophénol, ou un mélange de ceux-ci.

13. Composition liquide polymérisable de la revendication 12, dans laquelle lesdites nanoparticules de ZnS sont enrobées d'un mélange de mercaptoéthanol et thiophénol, de préférence avec un rapport molaire de mercaptoéthanol et thiophénol sur Zn compris entre 2,0 et 0,1, de préférence entre 0,6 et 0,3.

14. Composition liquide polymérisable de la revendication 12, dans laquelle lesdites nanoparticules de ZnS sont enrobées de mercaptoéthanol de préférence avec un rapport molaire de mercaptoéthanol sur ZnS est compris entre 1,3 et 1,6.

15. Composition liquide polymérisable de l'une quelconque des revendications 12 à 14, dans laquelle lesdites nanoparticules de ZnS ont une taille de cristaux comprise entre 3 nm et 10 nm, et la taille de particules des nanoparticules de ZnS enrobées avec le(s)dit(s) composé(s) contenant un thiol est comprise entre 4 nm et 80 nm.

16. Composition liquide polymérisable de l'une quelconque des revendications 1 à 15, la quantité desdites nanoparticules minérales dans la composition polymérisable étant comprise entre 5 % pds/pds et 60 % pds/pds, de préférence entre 10 % pds/pds et 50 % pds/pds, rapporté au poids total de la composition liquide polymérisable.

17. Substrat optique revêtu avec la composition liquide selon l'une quelconque des revendications 1 à 16.

18. Article optique durci de la composition liquide selon l'une quelconque des revendications 1 à 16.

19. Article optique comprenant :
(a) un substrat optique, et
(b) un revêtement obtenu par durcissement thermique et/ou aux UV de la composition liquide polymérisable selon l'une quelconque des revendications 1 à 16.

20. Substrat optique selon la revendication 17, le substrat étant un verre ophtalmique ou un verre optique pour instrument optique.

21. Article optique selon la revendication 18, l'article étant un verre ophtalmique ou un verre optique pour instrument optique.

22. Utilisation de nanoparticules minérales pour augmenter l'indice de réfraction d'un matériau polymère obtenu par durcissement thermique et/ou aux UV d'une composition liquide de monomère contenant un monomère de formule (I) : 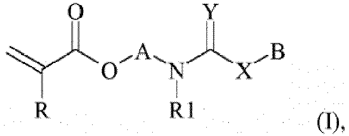 dans laquelle :
R représente un atome d'hydrogène ou un groupe méthyle,
A représente une chaîne hydrocarbonée comprenant 1, 2, 3 ou 4 atomes de carbone,
Y est un atome d'oxygène ou un atome de soufre,
X est -0-, -S- ou -NR2-,
R1 et R2, identiques ou différents, sont un atome d'hydrogène ou un alkyle en C1-C6, et
B représente un groupe alkyle en C1-C6, aryle, hétéroaryle, aryl-alkyle en C1-C6 ou hétéroaryl-alkyle en C1-C6,
ou bien B est absent et R1 et X forment un hétérocycle à 5 chaînons, tel qu'une 2-imidazolidinone, éventuellement substituée sur -NH-, une 2-oxazolidinone ou une 2-thiazolidinone,
ou bien B représente : 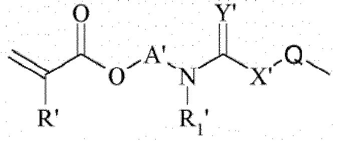
dans lequel :
R' représente un atome d'hydrogène ou un groupe méthyle,
A' représente une chaîne hydrocarbonée comprenant 1, 2, 3 ou 4 atomes de carbone,
Y' est un atome d'oxygène ou un atome de soufre,
X' est -0-, -S- ou -NR2'-,
R1' et R2', identiques ou différents, sont un atome d'hydrogène ou un alkyle en C1-C6, et
Q représente une chaîne hydrocarbonée comprenant 1, 2, 3 ou 4 atomes de carbone substituée par un groupe aryle, hétéroaryle, aryl-alkyle en C1-C6, aryloxy, arylthio, aryl(alkyl en C1-C10)oxy, aryl(alkyl en C1-C10)thio, hétéroaryl-alkyle en C1-C6, hétéroaryl(alkyl en C1-C10)oxy, ou hétéroaryl(alkyl en C1-C10)thio,
dans laquelle lesdites nanoparticules minérales sont dispersées de façon homogène dans ladite composition de monomère.

23. Utilisation selon la revendication 22, dans laquelle lesdites nanoparticules minérales sont choisies parmi ZnS, ZrO₂, TiO₂ ou BaTiO₃.
